# DEMANDE DE BREVET EUROPEEN

(11) **EP 3 778 940 A1**
(43) Date de publication de la demande: **17.02.2021**
(21) Numéro de dépôt: 20190756.5
(22) Date de dépôt: 12.08.2020
(51) Int. Cl.: C22C 5/00, C22C 5/02, C22C 5/04, C22C 5/06, C22C 14/00, C22C 21/00, C22C 32/00, G04B 37/22, A44C 27/00

(54) **MATÉRIAU COMPOSITE, COMPOSANT HÉTÉROGÈNE POUR PIÈCE D'HORLOGERIE ET PROCÉDÉ DE FABRICATION**

(30) Priorité: 15.08.2019 CH 10292019
(71) Demandeur: Manufacture d'Horlogerie Audemars Piguet SA, 1348 Le Brassus (CH)
(72) Inventeur: Le Loarer, Thibaut, 74270 Chavannaz (FR); Guadalupe Maldonado, Sandra, 1323 Romainmôtier (CH)
(74) Mandataire: P&TS SA (AG, Ltd.)

(57) **Abrégé**

Préforme et procédé de fabrication produisant des composants hétérogènes avec une première fraction (11) réalisée en un premier matériau métallique et ayant une structure cellulaire avec des cellules stochastiques ou régulières, et une seconde fraction (12) réalisée en un second matériau métallique différent du premier matériau métallique, dans lequel la seconde fraction (12) infiltre au moins en partie les cellules de la première fraction (11). La seconde fraction est coulée dans la préforme qui fait aussi office de moule. Le produit fini après usinage peut présenter une surface unie de la seconde fraction ou plusieurs zones laissant apparaître la seconde fraction, la première fraction, la structure cellulaire ouverte ou infiltrée par la seconde fraction métallique, ou des zones ouvertes, selon un design prédéterminé.

## Description

### Domaine technique

La présente invention concerne un matériau composite et un composant hétérogène dans un tel matériau composite. L'invention concerne également un procédé de fabrication d'un tel composant hétérogène.

L'invention s'applique au domaine de l'horlogerie, et la présente description se rapportera principalement à ce domaine à titre d'exemple, mais l'invention n'est pas ainsi limitée et peut s'appliquer également aux domaines de la maroquinerie, bijouterie, lunetterie, production d'instruments d'écriture et bien d'autre, ainsi qu'à la production d'objet fonctionnels grâce aux particularités du matériau composite proposé.

### Etat de la technique

Plusieurs métaux précieux sont utilisés dans l'horlogerie, principalement pour des pièces d'habillage, mais également pour des composants fonctionnels. Les métaux précieux courants, par exemple l'or et ses alliages, sont lourds et se rayent facilement. Il y a par conséquent un besoin de matériaux alliant préciosité et aspect esthétique avec dureté, légèreté et autres propriétés désirables nouvelles.

Les publications WO2012119647 et US7608127 décrivent des matériaux composites utilisable, entre autres, pour la production de montres et bijoux, combinant un matériau céramique avec un métal précieux. Ces matériaux sont plus durs et légers que les alliages d'or. Cependant leur surface est hétérogène et la couleur est différente de celle de l'or naturel.

La publication JPS62260026 décrit un procédé de production d'un composant avec un noyau en titane ou aluminium cellulaire recouvert d'une couche d'or, tandis que US 4822694 A divulgue un matériau composite comprenant une mousse rigide à pores ouverts et un matériau solide remplissant les alvéoles de la mousse.

On connait aussi des pièces d'habillage horlogères en matériau composite, avec une matrice métallique ou en fibres de carbone remplie par des résines synthétiques. Ces matériaux allient légèreté et résistance, mais leur dureté n'est pas particulièrement élevée, et ne contiennent pas de métaux précieux.

### Bref résumé de l'invention

Un but de la présente invention est de proposer un matériau composite pour réaliser des composants horlogers hétérogènes combinant un aspect extérieur métallique avec légèreté et/ou résistance à l'usure.

Selon l'invention, ces buts sont atteints notamment au moyen de l'objet des revendications annexées, et notamment par une préforme pour la fabrication d'un composant hétérogène comportant une cavité délimitée par des zones pleines, la cavité étant au moins partiellement remplie par une structure cellulaire ouverte, les zones pleines et la structure cellulaire ouverte étant réalisées dans un premier matériau métallique, la cavité étant destinée à recevoir et contenir une coulée d'un second matériau métallique à l'état fondu.

Un autre but de l'invention est de proposer un procédé de fabrication d'un tel composant hétérogène pour pièce d'horlogerie comprenant les étapes de : se munir d'une se munir d'une préforme comme revendiqué plus haut; couler dans la cavité de la première préforme une seconde fraction réalisée en un second matériau métallique différent du premier matériau, la seconde fraction infiltrant au moins en partie la structure cellulaire de la préforme ; après solidification de la deuxième fraction, usiner la préforme aux dimensions finales.

Les revendications dépendantes concernent des caractéristiques optionnelles favorables ou avantageuses d'exécution, par exemple que la seconde fraction entoure au moins en partie la première fraction et présente une surface extérieure unie, ou au moins une partie des cellules de la structure cellulaire est vide, que le second matériau est un alliage de métal précieux, ou un verre métallique précieux, par exemple un alliage d'or, argent, palladium ou platine, que le premier matériau présente une dureté supérieure à la dureté du second matériau et/ou le premier matériau présente une densité inférieure à la densité du second matériau, le fait que le premier matériau métallique est un alliage d'aluminium ou de titane, ou un verre métallique.

En ce qui concerne le procédé, avec référence aux revendications dépendantes de cette catégorie, l'invention comporte optionnellement une étape de chauffe dans laquelle le second matériau est au moins partiellement amené à la température de fusion, une opération ou plusieurs opérations de fabrication additive, par exemple une opération de frittage sélectif ou fusion sélective de poudres métalliques, ou le placement du noyau dans un moule suivi d'une étape d'injection du second matériau à l'état liquide, ainsi que des étapes de découpage et finition.

Un autre but de l'invention est une pièce d'horlogerie obtenue à partir d'une préforme et/ou par un des procédés revendiqués, et notamment où la préforme est configurée pour créer un design prédéterminé comportant des zones pleines et des zones poreuses et/ou des zones ouvertes dans une section selon une surface prédéterminée

### Brève description des figures

Des exemples de mise en oeuvre de l'invention sont indiqués dans la description illustrée par les figures annexées dans lesquelles :
- La figure 1 illustre schématiquement une première fraction, ou matrice, ayant une structure cellulaire, dans lequel les cellules sont vides (remplies de gaz)
- La figure 2 montre schématiquement une réalisation de l'invention dans laquelle la première fraction cellulaire est entourée par une seconde fraction, appelée également peau, métallique formée par le second matériau, et le second matériau infiltre en partie la première fraction cellulaire.
- La figure 3 illustre un procédé de fabrication comprenant des étapes d'injection dans un moule.
- La figure 4 illustre un procédé alternatif dans lequel un préformé en composite est découpée et ensuite fini par des procédés d'usinage et terminaison.
- Les figures 5a à 5e illustrent schématiquement un exemple de composant horloger hétérogène selon l'invention et les différentes étapes du procédé permettant de l'obtenir.

### Exemple(s) de modes de réalisation de l'invention

### Définitions

Dans le contexte de la présente invention on utilise les mots "mousse", ou "structure cellulaire" pour désigner des matériaux comportant une abondance de cavités vides, aussi appelées "cellules", "pores" ou "bulles". Préférentiellement, mais pas nécessairement, le volume combiné des cavités est prépondérant par rapport au volume de matière solide. Dans les mousses métalliques, notamment, la matière solide est un métal, par exemple de l'aluminium, du titane, un métal amorphe (verre métallique) ou tout autre métal ou alliage métallique.

On distingue les mousses avec des cellules stochastiques de taille et/ou forme variables, par exemple obtenues par injection de gaz ou d'un agent moussant dans un métal fondu, et les mousses régulières avec un réseau régulier de cellules de même forme et dimensions. Ces dernières sont fabricables par des techniques de coulée et/ou par fabrication additive.

Une mousse peut être "ouverte" ou "fermée". Elle est ouverte si suffisamment de cellules sont en communication entre-elles, permettant une certaine circulation du gaz à travers la mousse (percolation) ; fermée dans le cas contraire.

### Modes de réalisation

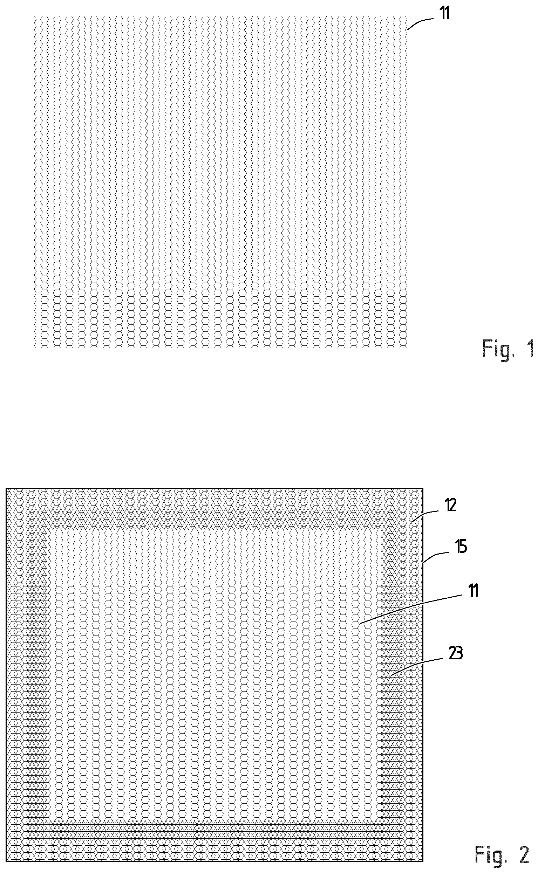

Les figures 1 et 2 montrent schématiquement la structure d'un matériau composite hétérogène employé dans le cadre de la présente invention. Ce matériau composite comporte une première fraction 11 constituée par une mousse métallique. La première fraction 11 comporte une abondance de cavités, représentées dans la figure par un réseau régulier, mais qui pourraient aussi être stochastiques, comme on l'a évoqué plus haut.

La figure 2 montre une seconde fraction métallique 12 qui s'ajoute à la première fraction 11. Dans cet exemple, le matériau composite comporte une seconde fraction 12 sous la forme d'une peau présentant une surface extérieure visible 15 unie et homogène, en sorte que la pièce obtenue a l'aspect du métal constituant la seconde fraction. Favorablement, on peut employer un matériau précieux, par exemple un alliage d'or, pour la seconde fraction 12, et un métal léger tel que l'aluminium ou le titane pour la première fraction 11, en sorte que la pièce composite sera considérablement plus légère qu'une pièce en or massif, tout en présentant le même aspect esthétique. Comme on peut le voir dans la figure 2, la seconde fraction métallique 12 infiltre au moins partiellement - dans la zone 23 - la structure cellulaire de la première fraction 11. Pour une plus grande légèreté, l'infiltration de la seconde fraction 12 dans la matrice 11 peut être incomplète et laisser une zone vide au centre.

L'adhésion entre la matrice cellulaire 11 et la peau 12 pourra être uniquement mécanique, la peau remplissant les porosités de surface de la matrice et engendrant un ancrage mécanique. La peau peut présenter un point de fusion proche de celui de la matrice permettant en plus de l'ancrage mécanique une adhésion physique et chimique.

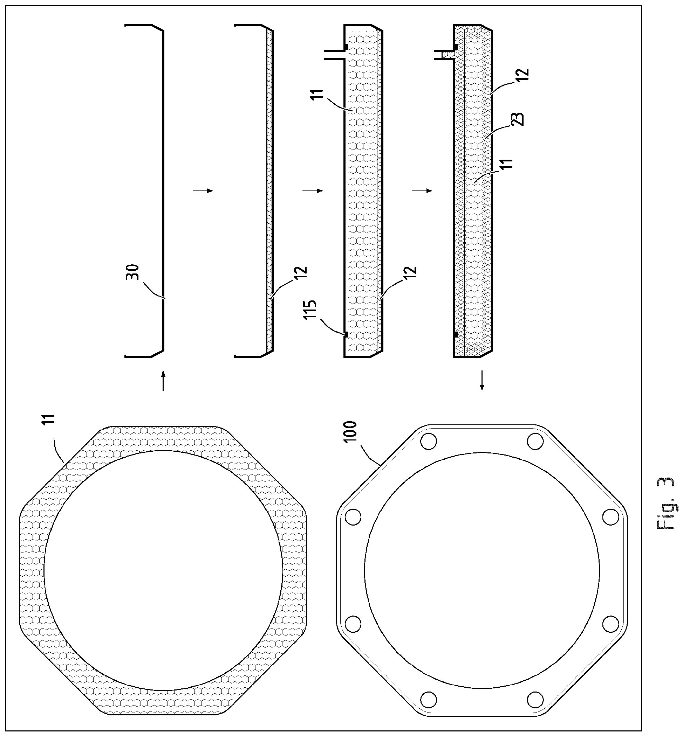

La figure 3 illustre schématiquement un exemple de composant horloger hétérogène selon l'invention et les différentes étapes du procédé permettant de l'obtenir. Dans l'exemple illustré à la figure 3, le composant hétérogène est une lunette de montre ultralégère en or. L'invention n'est pas limitée à la production de pièces d'habillage pour montres.

Une première fraction 11 en mousse de titane est obtenu par usinage, étampage, ou toute autre technique appropriée. Toutes ses dimensions sont inférieures à celle de la pièce que l'on souhaite obtenir. Dans cet exemple le noyau est une pièce massive mais on peut imaginer aussi des noyaux assemblés de plusieurs éléments, dans le cas de formes complexes.

Le moule 30 représente en creux la forme de l'objet (ici une lunette de montre) que l'on désire obtenir, préférablement légèrement agrandie pour permettre les opérations de finition et terminaison usuelles. La première fraction 11 est insérée dans le moule préalablement à la coulée de l'alliage d'or sélectionné pour la seconde fraction métallique 12. La première fraction 11 est maintenu immobile dans la position souhaitée à l'intérieur du moule 30 par des moyens idoines. Dans l'exemple représenté, la première fraction 11 est serré entre une couche d'or 120 et les cales 115, mais beaucoup d'autres solutions sont possibles dans le cadre de la présente invention.

L'alliage d'or est coulé dans le moule 30, préférablement sous pression. Après le refroidissement et l'ouverture du moule, la lunette 100 est ébavurée, usinée aux dimensions finales et polie. Elle comporte, autour du noyau cellulaire de la première fraction 11, une seconde fraction 12 sous forme de peau qui infiltre au moins partiellement les pores du noyau et présente une surface extérieure unie.

L'invention n'est pas limitée à des procédés de coulée classiques mais inclut aussi tous les procédés spéciaux de moulage appropriés, y compris le moulage par injection de poudres et les techniques de fabrication additives.

Les techniques de fabrication additives et d'impression 3D permettent notamment de réaliser la première fraction mais aussi la seconde fraction métallique de l'invention, par exemple sur la même machine d'impression que la matrice, avec l'utilisation de plusieurs matières. Les techniques d'impression 3D permettent une optimisation poussée de la structure interne de la première fraction et de l'épaisseur de la seconde fraction pour les efforts que la pièce est appelée à supporter, avec un gain considérable de légèreté par rapport aux pièces d'habillage de fabrication conventionnelle.

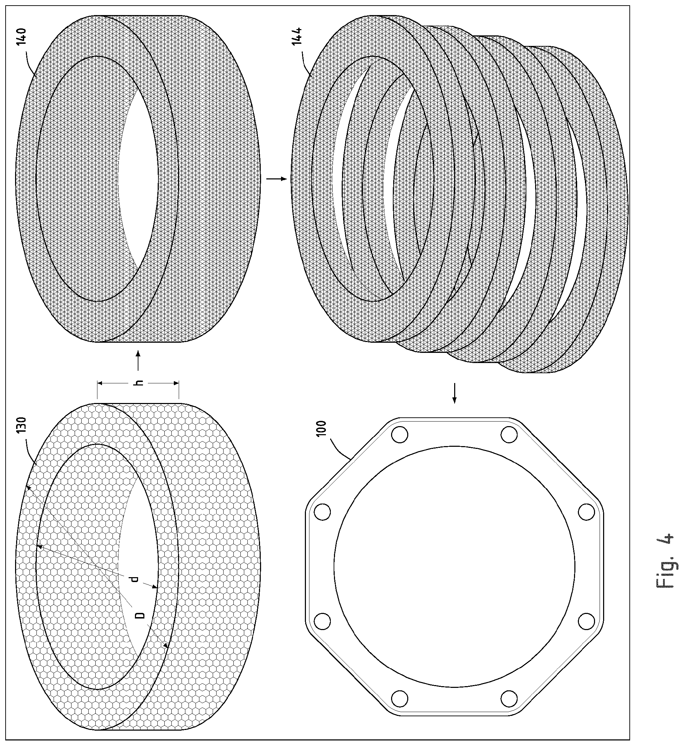

La figure 4 représente schématiquement un autre mode de réalisation de l'invention dans lequel la première fraction métallique 11 est une préforme en mousse ouverte de titane dont les dimensions (diamètres d et D, hauteur h) sont supérieures à celles de la pièce que l'on souhaite obtenir. La préforme est infiltrée sous pression par un alliage précieux, par exemple de l'or 5N 22ct pour obtenir une préforme en matériau composite 140 qui est ensuite découpée à la hauteur voulue (pièces 144) et finalement usinée et terminée dans la forme souhaitée.

Par rapport à une pièce d'habillage conventionnelle en or, la lunette composite or/mousse de titane est plus légère et présente une meilleure résistance à l'usure et aux rayures. Avantageusement, on peut remplacer la mousse de titane par une mousse d'un autre métal ayant les caractéristiques de dureté souhaitées.

Les alliages métalliques amorphes, ou verres métalliques, présentent des duretés et des contraintes à la rupture très élevées et peuvent être avantageusement employés pour réaliser la structure cellulaire de la première fraction du matériau composite selon l'invention. Les alliages de Pd, Cu, Ni, P, notamment un verre métallique avec des proportions atomiques Pd43, Cu27, Ni10, P20 sont spécialement conseillés pour réaliser les structures cellulaires des premières fractions 11.

Les alliages métalliques amorphes, ou verres métalliques, peuvent également contenir des matériaux précieux tels que l'or, le platine ou le palladium. Par exemple, un verre métallique peut contenir 750/1000 d'or fin ou plus en poids ; ces matériaux peuvent avantageusement être utilisés comme seconde fraction venant infiltrer la structure cellulaire de la première fraction.

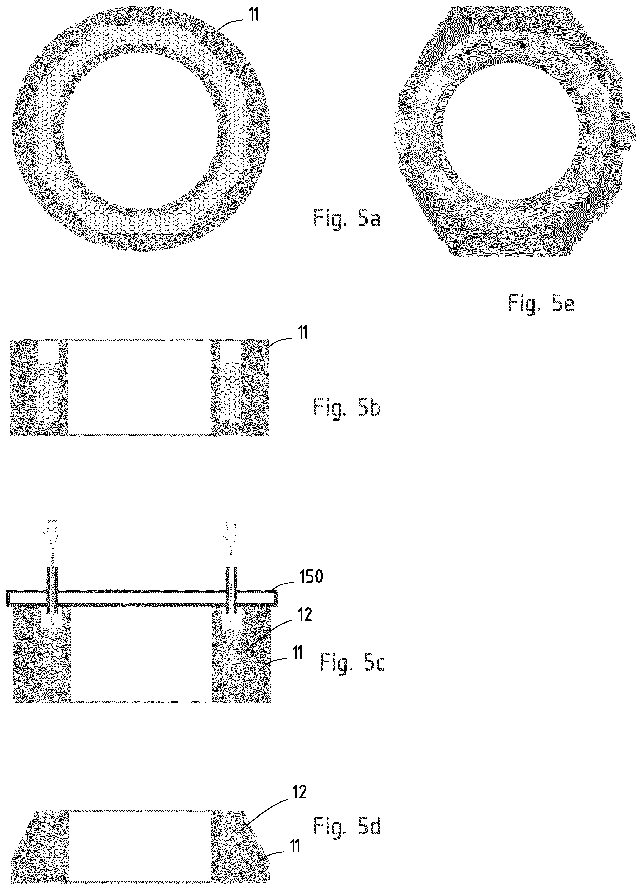

Les figures 5a à 5e illustrent schématiquement un exemple de composant horloger hétérogène selon l'invention et les différentes étapes du procédé permettant de l'obtenir. Dans ce mode de réalisation, le composant hétérogène est une lunette de montre en titane et or rose, présentant un design particulier et personnalisable. L'invention n'est pas limitée à la production de pièces d'habillage pour montres.

Les figures 5a et 5b présentent respectivement une vue de dessus et une coupe d'une préforme 140 qui est la première fraction 11. Cette préforme est obtenue par impression 3d, par exemple par un procédé SLS (selective laser sintering, frittage sélectif de poudres métalliques par laser), SLM (selective laser melting, fusion sélective de poudres métalliques par laser), EBM (electron beam melting), binder jet printing, ou n'importe quel procédé d'impression 3D approprié. Ses dimensions sont toutes supérieures à celles de la pièce finale que l'on souhaite obtenir. La pièce comporte une ou plusieurs parties pleines, c'est-à-dire ne comportant pas de cellules ouvertes mais un matériau plein, et une ou plus parties poreuses avec des cellules stochastiques ou régulières formant une mousse ouverte. Les formes et dimensions ont été déterminées pour obtenir un bon ancrage de la seconde fraction et un design en surface particulier de la pièce finale. Les parties pleines sont configurées pour donner lieu à des cavités partiellement étanches avec une ouverture, pour recevoir et contenir une coulée de métal en fusion, en sorte que la préforme 140 a également le rôle de moule pour le procédé.

Une seconde fraction 12 sous forme d'alliage d'or est coulée dans la préforme, préférablement sous pression, un couvercle 150 venant fermer cette dernière comme illustré figure 5c. La seconde fraction 12 va alors infiltrer les zones de cellules ouvertes de la première fraction 11.

Après refroidissement et ouverture du couvercle, la pièce obtenue comporte des zones pleines de la première fraction composée uniquement de titane sans pores, des zones hétérogènes comportant la deuxième fraction infiltrée dans la première fraction et éventuellement, selon le degré de remplissage de la deuxième fraction et la géométrie de la préforme, des zones non remplies de la première fraction comportant des cellules ouvertes ou des zones pleines de la deuxième fraction.

Le composant, ici une lunette, est ensuite usiné aux dimensions finales comme illustré sur la figure 5d. Il comporte, sur ses parois intérieures, du titane sans cellule ouverte permettant une bonne étanchéité, et de l'or constituant la seconde fraction qui infiltre les cellules ouvertes de titane.

Dans une variante, la préforme 140 est fabriquée en sorte que la partie poreuse, la partie pleine et la cavité coupent une surface prédéterminée de façon à donner un design prédéterminé contenant des régions pleines et poreuses et/ou vides et/ou infiltrées. Lors de l'étape d'usinage, la composante est coupée le long de la surface prédéterminée de façon à porter en surface et rendre visible le design voulu, comme illustré par la figure 5e.

Selon une variante, les parois externes de la cavité de la préforme sont enlevées lors des opérations d'usinage en sorte que la composante terminée présente une surface unie de la seconde fraction métallique.

## Revendications

1. Préforme pour la fabrication d'un composant hétérogène comportant une cavité délimitée par des zones pleines, la cavité étant au moins partiellement remplie par une structure cellulaire ouverte, les zones pleines et la structure cellulaire ouverte étant réalisées dans un premier matériau métallique, la cavité étant destinée à recevoir et contenir une coulée d'un second matériau métallique à l'état fondu.

2. Préforme selon la revendication précédente, dans laquelle le premier matériau est en titane, en un alliage d'aluminium ou de titane, ou en un verre métallique.

3. Préforme selon l'une des revendications précédentes, fabriquée par un procédé additif, par exemple un procédé d'impression 3D SLS ou SLM.

4. Préforme selon l'une des revendications précédentes, la structure cellulaire comportant des alvéoles régulières ou stochastiques.

5. Procédé de fabrication d'un composant hétérogène pour pièce d'horlogerie comprenant les étapes de :
- se munir d'une préforme (140) selon l'une des revendications précédentes ;
- couler dans la cavité (145) de la première préforme (140) une seconde fraction (12) réalisée en un second matériau métallique différent du premier matériau, la seconde fraction infiltrant au moins en partie la structure cellulaire de la préforme (140) ;
- après solidification de la deuxième fraction, usiner la préforme aux dimensions finales.

6. Procédé de fabrication selon la revendication 5, dans lequel la préforme est configurée pour créer un design prédéterminé comportant des zones pleines et des zones poreuses et/ou des zones ouvertes dans une section selon une surface prédéterminée et l'usinage comporte la coupe de la préforme le long de la surface prédéterminée pour porter en surface et rendre visible le design.

7. Procédé de fabrication selon l'une des revendications de 5 à , dans lequel le second matériau est un alliage de métal précieux, par exemple un alliage d'or, argent, ou platine.

8. Procédé de fabrication selon l'une des revendications de 5 à , dans lequel le second matériau est un verre métallique contenant un matériau précieux comme l'or, l'argent, le platine, le palladium, ou un verre métallique contentant une fraction d'or égale ou supérieure à 750/1000 en poids.

9. Procédé de fabrication selon l'une des revendications de 5 à , comprenant la pose d'un couvercle sur la préforme avant la coulée.

10. Procédé de fabrication selon l'une des revendications de 5 à , la coulée étant sous pression.

11. Procédé de fabrication selon l'une des revendications de 5 à , dans lequel la coulée laisse vide au moins une partie de la structure cellulaire.

12. Pièce d'horlogerie issu du procédé de l'une des revendications de 5 à .

13. Pièce d'horlogerie selon la revendication 12, dans lequel la préforme est configurée pour créer un design prédéterminé comportant des zones pleines et des zones poreuses et/ou des zones ouvertes dans une section selon une surface prédéterminée et l'usinage comporte la coupe de la préforme le long de la surface prédéterminée pour porter en surface et rendre visible le design.

14. Pièce d'horlogerie selon l'une des revendications de 12 à , dans lequel l'usinage laisse une surface unie de la seconde fraction métallique.
